# EUROPEAN PATENT SPECIFICATION

(11) **EP 4 215 011 B1**
(45) Date of publication and mention of the grant of the patent: **14.02.2024**
(21) Application number: 21778425.5
(22) Date of filing: 17.09.2021
(51) Int. Cl.: H04W 74/00, H04W 74/04, H04W 74/08, H04L 1/1607, H04L 5/00, H04L 1/00, H04L 1/1829, H04L 1/1867

(54) **COORDINATION OF ACKNOWLEDGEMENT FEEDBACK FOR SPATIAL-REUSE BASED TXOP SHARING**
KOORDINATION VON BESTÄTIGUNGSFEEDBACK FÜR AUF RÄUMLICHER WIEDERVERWENDUNG BASIERENDE TXOP-TEILUNG
COORDINATION DE RÉTROACTION D'ACCUSÉ DE RÉCEPTION POUR UN PARTAGE DE TXOP BASÉ SUR LA RÉUTILISATION SPATIALE

(30) Priority: 17.09.2020 US 202063079744 P
(43) Date of publication of application: 26.07.2023
(73) Proprietor: Telefonaktiebolaget LM Ericsson (publ), 164 83 Stockholm (SE)
(72) Inventor: PETTERSSON, Charlie, 169 37 Solna (SE); SEDIN, Jonas, TW80SU Brentford (GB); LOPEZ, Miguel, 170 69 Solna (SE); MAX, Sebastian, 50737 Cologne (DE)
(74) Representative: Ericsson
(86) International application number: PCT/EP2021/075667
(87) International publication number: WO 2022/058529

(56) References cited:
- EP-A1- 3 054 736
- WO-A1-2021/222374
- JONGHUN HAN (SAMSUNG): "Shared TXOP Spatial Reuse Considerations", IEEE DRAFT; 11-20-0590-02-00BE-SHARED-TXOP-SPATIAL-REU SE-CONSIDERATIONS, IEEE-SA MENTOR, PISCATAWAY, NJ USA , vol. 802.11 EHT; 802.11be, no. 2 16 July 2020 (2020-07-16), pages 1-13, XP068170064, Retrieved from the Internet: URL:https://mentor.ieee.org/802.11/dcn/20/ 11-20-0590-02-00be-shared-txop-spatial-reu se-considerations.pptx [retrieved on 2020-07-16]
- JASON YUCHEN GUO (HUAWEI TECHNOLOGIES CO LTD): "coordinated spatial reuse operation", IEEE DRAFT; 11-20-0033-01-00BE-COORDINATED-SPATIAL-REU SE-OPERATION, IEEE-SA MENTOR, PISCATAWAY, NJ USA , vol. 802.11 EHT; 802.11be, no. 1 6 February 2020 (2020-02-06), pages 1-14, XP068165614, Retrieved from the Internet: URL:https://mentor.ieee.org/802.11/dcn/20/ 11-20-0033-01-00be-coordinated-spatial-reu se-operation.pptx [retrieved on 2020-02-06]
- DAVID LOPEZ-PEREZ (NOKIA): "Coordinated Beamforming/Null Steering Protocol in 802.11be", IEEE DRAFT; 11-19-1594-02-00BE-COORDINATED-BEAMFORMING -NULL-STEERING-PROTOCOL-IN-802-11BE, IEEE-SA MENTOR, PISCATAWAY, NJ USA , vol. 802.11 EHT; 802.11be, no. 2 10 October 2019 (2019-10-10), pages 1-15, XP068154086, Retrieved from the Internet: URL:https://mentor.ieee.org/802.11/dcn/19/ 11-19-1594-02-00be-coordinated-beamforming -null-steering-protocol-in-802-11be.pptx [retrieved on 2019-10-10]
- CHENG CHEN (INTEL): "AP candidate set follow up", IEEE DRAFT; 11-20-0596-01-00BE-AP-CANDIDATE-SET-FOLLOW -UP, IEEE-SA MENTOR, PISCATAWAY, NJ USA , vol. 802.11 EHT; 802.11be, no. 1 30 July 2020 (2020-07-30), pages 1-8, XP068170329, Retrieved from the Internet: URL:https://mentor.ieee.org/802.11/dcn/20/ 11-20-0596-01-00be-ap-candidate-set-follow -up.pptx [retrieved on 2020-07-30]
- GEORGE CHERIAN (QUALCOMM): "Coordinated AP Time and Frequency Sharing in a Transmit Opportunity in 11be", IEEE DRAFT; 11-19-1582-02-00BE-COORDINATED-AP-TIME-AND -FREQUENCY-SHARING-IN-A-TRANSMIT-OPPORTUNI TY-IN-11BE, IEEE-SA MENTOR, PISCATAWAY, NJ USA , vol. 802.11 EHT; 802.11be, no. 2 14 January 2020 (2020-01-14), pages 1-15, XP068165239, Retrieved from the Internet: URL:https://mentor.ieee.org/802.11/dcn/19/ 11-19-1582-02-00be-coordinated-ap-time-and -frequency-sharing-in-a-transmit-opportuni ty-in-11be.pptx [retrieved on 2020-01-14]
- KAIYING LV (ZTE CORP): "frame-exchange-control-for-uplink-multi-u ser-transmission", IEEE DRAFT; 11-14-1190-03-00AX-FRAME-EXCHANGE-CONTROL- FOR-UPLINK-MULTI-USER-TRANSMISSION, IEEE-SA MENTOR, PISCATAWAY, NJ USA , vol. 802.11ax, no. 3 17 September 2014 (2014-09-17), pages 1-12, XP068156885, Retrieved from the Internet: URL:https://mentor.ieee.org/802.11/dcn/14/ 11-14-1190-03-00ax-frame-exchange-control- for-uplink-multi-user-transmission.pptx [retrieved on 2014-09-17]

## Description

### Technical Field

The present invention relates to methods for controlling wireless transmissions and to corresponding devices, systems, and computer programs.

### Background

In wireless communication technologies, there is an increased interest in using unlicensed bands, like the 2.4 GHz ISM band, the 5 GHz band, the 6 GHz band, and the 60GHz band using more advanced channel access technologies. Historically, Wi-Fi has been the dominant standard in unlicensed bands when it comes to applications requiring support for high data rates. Due to the large available bandwidth in the unlicensed band, the WLAN (Wireless Local Area Network) technology based on the IEEE 802.11 family standards provides a very simple distributed channel access mechanism based on the so-called distributed coordination function (DCF).

Distributed channel access means that a device, in IEEE 802.11 terminology known as a station (STA), tries to access the channel when it has data to send. Effectively there is no difference in channel access whether the station is an access point (AP) or a non-access point (non-AP). DCF works well as long as the load is not too high. When the load is high, and in particular when the number of stations trying to access the channel is large, channel access based on DCF does not work well. The reason for this is that there will be a high probability of collision on the channel, leading to poor channel usage.

To improve the channel usage, and in particular to allow for better support of a large number of devices, a more centralized channel access may be utilized. Such centralized channel access may involve that rather than letting a STA access the channel whenever it has data to send, the channel access is controlled by the AP. A corresponding channel access scheme is for example supported in the IEEE 802.11ax technology, see IEEE P802.11ax^{™}/D6.0 Draft Standard for Information technology- Tele-communications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (November 2019), in the following denoted as "IEEE 802.11ax Draft". The IEEE 802.11ax technology for example supports orthogonal frequency division multiple access (OFDMA) in both downlink (DL), i.e., in a direction from the AP to the STA, and uplink (UL), i.e., in a direction from the STA to the AP. Also multi-user transmission in form of multi-user multiple input multiple output (MU-MIMO) is supported for both the DL and the UL. By supporting MU transmission and letting the AP control the channel access within a cell, efficient channel usage is achieved and one can avoid collisions due to contention in the cell, in the IEEE 802.11 terminology also referred to as basic service set (BSS).

A default channel access mechanism used in current WLAN systems is referred to as enhanced distributed channel access (EDCA), as specified in IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2016 (Revision of IEEE Std 802.11-2012) , vol., no., pp.1-3534, 14 Dec. 2016, in the following denoted as "IEEE 802.11 PHY Specifications". In the EDCA channel access mechanism, the STA accesses the channel using a set of channel access parameters based on a traffic class of the data. The channel is obtained for a TXOP (transmission opportunity) duration time, in which multiple frames of the same data class may be transmitted. The maximum size of a TXOP depends on the data type. A typical duration of a TXOP is in the range of a few milliseconds.

To improve the performance even further, coordination of channel usage between cells may be utilized. Here, one approach is to let a number of APs share a TXOP. For example, if there are two or more APs within range using the same channel, with no coordination each of them would contend for the channel and the AP that wins the contention would then reserve the channel using the TXOP concept. The other APs would have to defer from channel access and wait for the TXOP to end. Then a new contention begins and channel access may or may not be gained for a specific AP. This implies that channel access becomes rather unpredictable and support for demanding QoS (Quality of Service) applications may be challenging. Such issues may be avoided by coordinated sharing of the TXOP by multiple APs. Such features are also referred to as coordinated or cooperating APs (CAP).

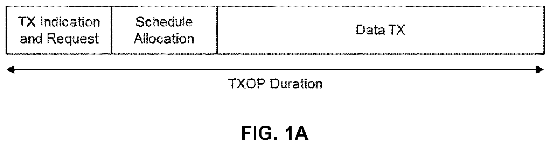

For example, "Coordinated AP Time/Frequency Sharing in a Transmit Opportunity in 11be", Internet document IEEE 802.11-19/1582r1 (URL: "https://mentor.ieee.org/802.11/dcn/19/11-19-1582-01-00be-coordinated-ap-time-and-frequency-sharing-in-a-transmit-opportunity-in-11be.pptx", November 2019) proposes a time/frequency resource sharing mechanism for an enhancement of the WLAN technology referred to as EHT (Extremely High Throughput). In this mechanism multiple APs belonging to the same Extended Service Set (ESS) can coordinate and share among themselves their time/frequency resources within a TXOP. The proposed mechanism consists of the three phases, as schematically illustrated in Fig. 1A. The first phase involves transmission of a TX indication frame and a request frame. In the first phase an AP that has gained a TXOP, also denoted as the TXOP owner, indicates to other APs that it is willing to share the TXOP (by means of the TX indication frame), and one or more neighboring APs indicate their intention to participate in sharing the resources (by the request frame). The TXOP owner may also be referred to as "Sharing AP", and the participating AP(s) may also be referred to as "Shared AP(s)". The first phase may also be referred to as initial coordination phase. In the second phase the TXOP owner informs the participating APs about their allocated resources and a TX start time, and the participating APs inform their client STAs about their respective resource allocations. In the third phase the participating APs transmit on their respective allocated resources in the TXOP, beginning at the TX start time.

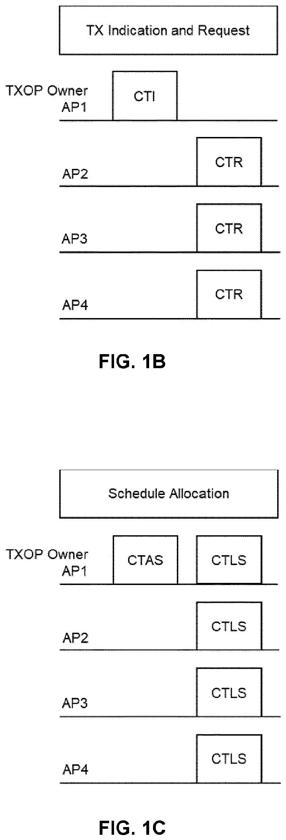

Fig. 1B illustrates further details of the first phase, assuming a scenario with four APs, denoted as AP1, AP2, AP3, and AP4. In the example of Fig. 1B, the TXOP owner, i.e., AP1 first sends a CTI (CAP TXOP Indication) message, and the APs willing to participate in the sharing of the TXOP, i.e., AP2, AP3, and AP4, respond with a CTR (CAP TXOP Request) message. By means of the CTI message, AP1 notifies the other APs that it has obtained the TXOP and is willing to share it. By means of the CTR, AP2, AP3, and AP4 notify AP1 that they are willing to participate in the sharing of the TXOP.

Fig. 1C illustrates further details of the second phase, again assuming a scenario with four APs, denoted as AP1, AP2, AP3, and AP4. In the example of Fig. 1C, the TXOP owner, i.e., AP1, informs the participating APs, i.e., AP2, AP3, AP3, about their allocated resources and the TX start time. This is accomplished by sending a CTAS (CAP TXOP AP Schedule) message and the participating APs inform their associated STAs about their respectively allocated resources according to local scheduling within the BSS of the participating AP. This is accomplished by sending a CTLS (CAP TXOP Local Schedule) message.

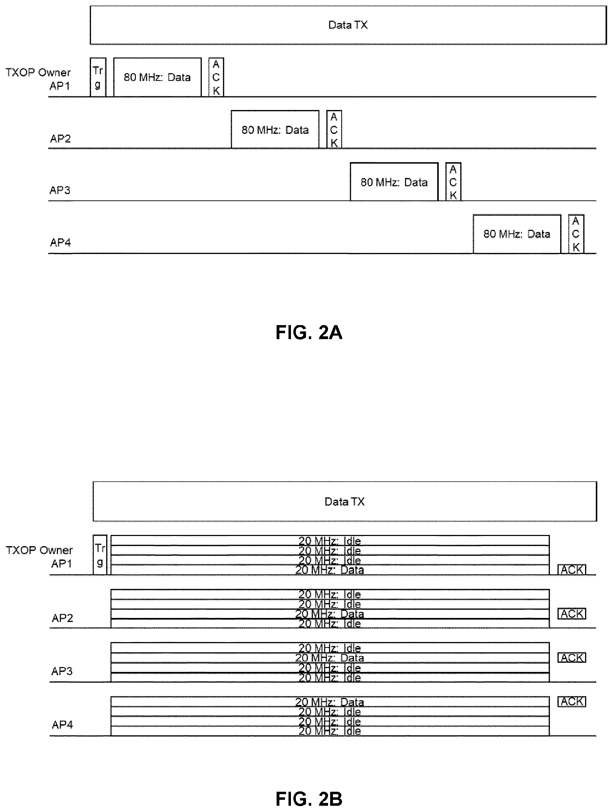

The sharing of the TXOP during the transmission of data in the third phase can be based on multiplexing in the time domain, e.g., TDMA (Time Division Multiple Access), multiplexing in the frequency domain, e.g., OFDMA, or multiplexing in the spatial domain, e.g., using MU-MIMO (Multi-User Multiple Input / Multiple Output). Fig. 2A illustrates an example of sharing based on multiplexing in the time domain, and Fig. 2B shows an example of sharing in the frequency domain.

Further, the sharing of the TXOP can be based on spatial reuse, which is also referred to as coordinated spatial reuse (CSR). In such variants, the resources of the TXOP can be used simultaneously, sometimes in combination with transmit power control, and multiplexing of the resources of the TXOP is not required. CSR-based operation is for example described in "Coordinated Spatial Reuse Operation", Internet document IEEE 802.11-20/0033r0 (URL: https://mentor.ieee.org/802.11/dcn/20/11-20-0033-00-00be-coordinated-spatial-reuse-operation.pptx, December 2019) or in "Coordinated Spatial Reuse Procedure", Internet document IEEE 802.11-20/0410r0 (URL: https://mentor.ieee.org/802.11/dcn/20/11-20-0410-00-00be-coordinated-spatial-reuse-procedure.pptx, March 2020), and in "Coordinated Spatial Reuse: Focus on Downlink", Internet document IEEE 802.11-20/0590r2 (URL: https://mentor.ieee.org/802.11/dcn/20/11-20-0590-02-00be-shared-txop-spatial-reuse-considerations.pptx, July 2020).

CSR can be used to improve the spatial efficiency in a system consisting of more than one AP. As compared to coordinated beamforming which aims to increase spatial efficiency by nulling towards other devices, in the case of CSR the same frequency and time resources may be used for multiple transmissions, sometimes combined with coordinated power control between the APs such that the interference levels are tolerable at the different receivers of each BSS.

In some cases, CSR can be based on opportunistic sharing, which means that a sharing AP that wins a TXOP shares it with other APs in a way that does not worsen the performance at the sharing AP compared to if the TXOP had not been shared. In such cases, the sharing AP may transmit with full transmit power and the shared APs adapt their transmit power based on how much transmit power is allowed by the sharing AP.

Some existing CSR schemes are based on performing the sharing for transmission of a single physical protocol data unit (PPDU) per AP. Accordingly, after an announcement frame indicating to start transmitting based on spatial reuse, the transmission will only last for a single PPDU. Alternatively, CSR could be implemented based on sharing of a TXOP, e.g., as explained above. Since the TXOP duration can be longer than the time required for transmission of a single PPDU, it would then be possible that each AP transmits multiple PPDUs in a TXOP. However, if the APs are allowed to freely transmit PPDUs of any duration and receive Block Acknowledgements (BAs) for these PPDUs, there is a risk that there will be collisions between PPDUs and BAs, which may adversely affect performance. Such adverse effects may also be due to the fact that BAs are typically sent with lower modulation and coding scheme (MCS) than PPDUs containing data, which means that there is a significant risk that the transmission of a BA on the same resources as a PPDU containing data will result in failure of reception of the PPDU.

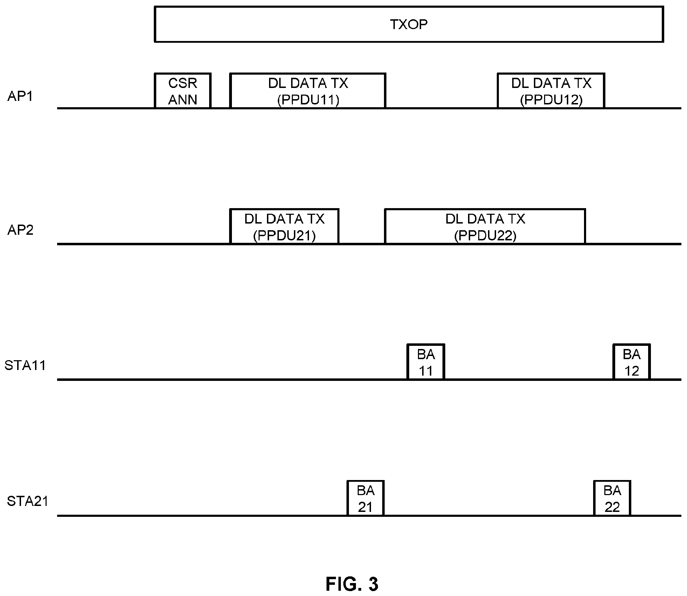

Fig. 3 shows an example of a scenario where a TXOP is shared by AP1 and AP2 for transmission of multiple PPDUs by each AP. The example of Fig. 3 involves that AP1 reserves a TXOP and shares this TXOP with AP2, so that CSR-based sharing of the TXOP can be used for transmission of multiple PPDUs by AP1 and for transmission of multiple PPDUs by AP2. The CSR-based sharing of the TXOP is initiated by transmission of a CSR announcement frame (CSR ANN) by AP1 at the beginning of the TXOP. AP1 then uses the TXOP to transmit PPDUs to an STA associated with AP1. This STA is denoted as STA11. AP2 uses the TXOP to transmit PPDUs to an STA associated with AP2. This STA is denoted as STA21.As can be seen, the transmission of some BAs in the TXOP collides with the transmission the PPDUs. In the example of Fig. 3, the transmission of BA21 collides with the transmission of PPDU11 by AP1, and the transmission of BA11 collides with the transmission of PPDU22 by AP2. Such collisions may result in failure of reception of the colliding PPDU, which may in turn adversely affect performance in the system.

Accordingly, there is a need for techniques which allow for improved utilization of spatial reuse for wireless transmissions between APs and STAs associated with APs.

### Summary

According to an embodiment, a method of controlling wireless transmissions in a wireless communication system is provided. According to the method, an AP of the wireless communication system contends for access to a medium. In response to gaining access to the medium, the AP reserves a TXOP on the medium. Further, the AP cooperates with one or more further APs of the wireless communication system by sharing the TXOP based on spatial reuse of at least some radio resources of the TXOP for transmission of multiple PPDUs by each of the APs. Further, the AP coordinates transmissions of acknowledgment information for each of the multiple PPDUs within the TXOP to avoid interference between the transmissions of the PPDUs and the transmissions of the acknowledgement information.

According to a further embodiment, a method of controlling wireless transmissions in a wireless communication system is provided. According to the method, an AP of the wireless communication system contends for access to a medium. In response to another AP of the wireless communication system gaining access to the medium and reserving a TXOP on the medium, the AP cooperates with the other AP by sharing the TXOP based on spatial reuse of at least some radio resources of the TXOP for transmission of multiple PPDUs by each of the APs. Further, for each of the PPDUs transmitted by the AP, the AP coordinates transmission of acknowledgment information for the PPDU within the TXOP with transmission of acknowledgement information for the PPDUs transmitted by the other AP to avoid interference between the transmissions of the PPDUs and the transmissions of the acknowledgement information.

According to a further embodiment, an AP for a wireless communication system is provided. The AP is configured to contend for access to a medium. Further, the AP is configured to, in response to gaining access to the medium, reserve a TXOP on the medium. Further, the AP is configured to cooperate with one or more further APs of the wireless communication system by sharing the TXOP based on spatial reuse of at least some radio resources of the TXOP for transmission of multiple PPDUs by each of the APs. Further, the AP is configured to coordinate transmissions of acknowledgment information for each of the multiple PPDUs within the TXOP to avoid interference between the transmissions of the PPDUs and the transmissions of the acknowledgement information.

According to a further embodiment, an AP for a wireless communication system is provided. The AP comprises at least one processor and a memory. The memory contains instructions executable by said at least one processor, whereby the AP is operative to, in response to gaining access to the medium, reserve a TXOP on the medium. Further, the memory contains instructions executable by said at least one processor, whereby the AP is operative to cooperate with one or more further APs of the wireless communication system by sharing the TXOP based on spatial reuse of at least some radio resources of the TXOP for transmission of multiple PPDUs by each of the APs. Further, the memory contains instructions executable by said at least one processor, whereby the AP is operative to coordinate transmissions of acknowledgment information for each of the multiple PPDUs within the TXOP to avoid interference between the transmissions of the PPDUs and the transmissions of the acknowledgement information.

According to a further embodiment, an AP for a wireless communication system is provided. The AP is configured to contend for access to a medium. Further, the AP is configured to, in response to another AP of the wireless communication system gaining access to the medium and reserving a TXOP on the medium, cooperate with the other AP by sharing the TXOP based on spatial reuse of at least some radio resources of the TXOP for transmission of multiple PPDUs by each of the APs. Further, the AP is configured to, for each of the PPDUs transmitted by the AP, coordinate transmission of acknowledgment information for the PPDU within the TXOP with transmission of acknowledgement information for the PPDUs transmitted by the other AP to avoid interference between the transmissions of the PPDUs and the transmissions of the acknowledgement information.

According to a further embodiment, an AP for a wireless communication system is provided. The AP comprises at least one processor and a memory. The memory contains instructions executable by said at least one processor, whereby the AP is operative to, in response to another AP of the wireless communication system gaining access to the medium and reserving a TXOP on the medium, cooperate with the other AP by sharing the TXOP based on spatial reuse of at least some radio resources of the TXOP for transmission of multiple PPDUs by each of the APs. Further, the memory contains instructions executable by said at least one processor, whereby the AP is operative to, for each of the PPDUs transmitted by the AP, coordinate transmission of acknowledgment information for the PPDU within the TXOP with transmission of acknowledgement information for the PPDUs transmitted by the other AP to avoid interference between the transmissions of the PPDUs and the transmissions of the acknowledgement information.

According to a further embodiment of the invention, a computer program or computer program product is provided, e.g., in the form of a non-transitory storage medium, which comprises program code to be executed by at least one processor of an AP for a wireless communication system is provided. Execution of the program code causes the AP to, in response to gaining access to the medium, reserve a TXOP on the medium. Further, execution of the program code causes the AP to cooperate with one or more further APs of the wireless communication system by sharing the TXOP based on spatial reuse of at least some radio resources of the TXOP for transmission of multiple PPDUs by each of the APs. Further, the execution of the program code causes the AP to coordinate transmissions of acknowledgment information for each of the multiple PPDUs within the TXOP to avoid interference between the transmissions of the PPDUs and the transmissions of the acknowledgement information.

According to a further embodiment of the invention, a computer program or computer program product is provided, e.g., in the form of a non-transitory storage medium, which comprises program code to be executed by at least one processor of an AP for a wireless communication system is provided. Execution of the program code causes the AP to contend for access to a medium. Further, execution of the program code causes the AP to, in response to another AP of the wireless communication system gaining access to the medium and reserving a TXOP on the medium, cooperate with the other AP by sharing the TXOP based on spatial reuse of at least some radio resources of the TXOP for transmission of multiple PPDUs by each of the APs. Further, execution of the program code causes the AP to, for each of the PPDUs transmitted by the AP, coordinate transmission of acknowledgment information for the PPDU within the TXOP with transmission of acknowledgement information for the PPDUs transmitted by the other AP to avoid interference between the transmissions of the PPDUs and the transmissions of the acknowledgement information.

Details of such embodiments and further embodiments will be apparent from the following detailed description of embodiments.

### Brief Description of the Drawings

Figs. 1A. 1B, and 1C schematically illustrate an example of a procedure for sharing of a TXOP by multiple APs.
Fig. 2A illustrates an example of sharing based on multiplexing in the time domain.
Fig. 2B shows an example of sharing in the frequency domain.
Fig. 3 shows an example for illustrating problems that may occur in the case of CSR-based sharing of a TXOP for transmission of multiple PPDUs by each AP.
Fig. 4 schematically illustrates a wireless communication system according to an embodiment.
Fig. 5 schematically illustrates sharing of a TXOP according to an embodiment.
Fig. 6 schematically illustrates sharing of a TXOP according to a further embodiment.
Fig. 7 shows a flowchart for schematically illustrating a method according to an embodiment.
Fig. 8 shows a block diagram for schematically illustrating functionalities of an AP according to an embodiment.
Fig. 9 shows a flowchart for schematically illustrating a method according to a further embodiment.
Fig. 10 shows a block diagram for schematically illustrating functionalities of an AP according to a further embodiment.
Fig. 11 schematically illustrates structures of an AP according to an embodiment.

### Detailed Description

In the following, concepts in accordance with exemplary embodiments of the invention will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project).

The illustrated concepts involve CSR-based sharing of a TXOP for transmission of multiple PPDUs by each AP participating in the sharing of the TXOP. That is to say, the sharing AP may use the TXOP to transmit multiple PPDUs to STAs associated with the sharing AP, and each of one or more shared APs may use the TXOP to transmit multiple PPDUs to its respectively associated STAs. In the CSR-based sharing, the DL data transmissions, i.e., the transmissions of the PPDUs are coordinated between the participating APs with respect to spatial reuse of radio resources of the TXOP. Further, also the transmission of acknowledgement feedback, e.g., in the form of BAs, is coordinated between the participating APs. This coordination may aim at time-aligning the BAs transmitted to different APs in such a way that that there is no unwanted interference between the transmission of DL data and BAs transmitted in the UL, without requiring power coordination of the BAs with respect to the DL transmissions of the PPDUs.

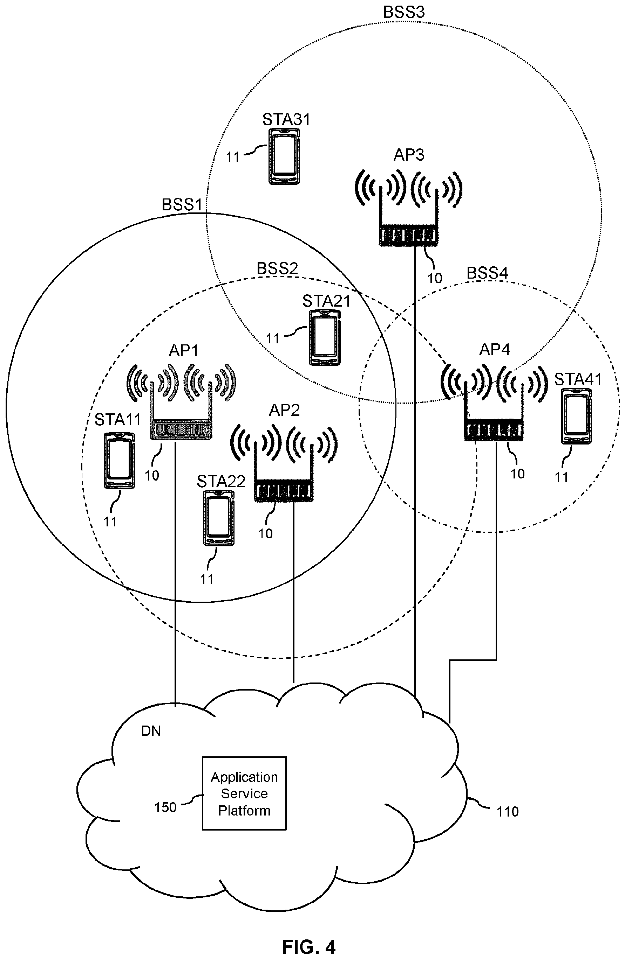

Fig. 4 illustrates an exemplary wireless communication system according to an embodiment. In the illustrated example, the wireless communication system includes multiple access points (APs) 10, in the illustrated example referred to as AP1, AP2, AP3, AP4, and multiple stations (STAs) 11, in the illustrated example referred to as STA11, STA21, STA22, STA31, STA32, and STA41. The station STA11 is served by AP1 (in a first BSS denoted as BSS1), the stations STA21 and STA22 are served by AP2 (in a second BSS denoted as BSS2). The stations STA31 and STA32 are served by AP3 (in a third BSS denoted as BSS3). The station STA41 is served by AP4 (in a fourth BSS denoted as BSS4). The stations 11 may correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 4, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band.

Each AP 10 may provide data connectivity of the stations 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 4 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

To achieve high performance in a scenario like illustrated in Fig. 4, coordination between the cells or BSSs may be utilized. For example, at least some of the involved APs 10 may contend for and share common resources. In particular, two or more of the APs 10 may contend for the same wireless medium or radio channel in order to obtain a TXOP. Then, the winning AP 10 can share the resources with the other contending APs in a dynamic fashion. For example, it can share the resources differently in different TXOPs. The wireless medium or radio channel may be based on one or more carriers, e.g., OFDM carriers. In the illustrated concepts, the sharing of the TXOP is assumed to utilize CSR based sharing for at least some of the radio resources of the TXOP.

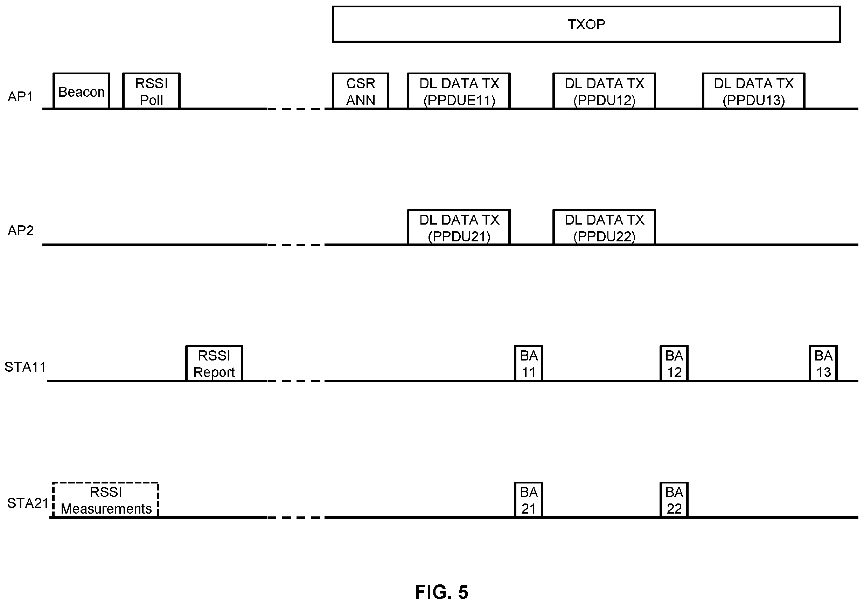

Fig. 5 shows an example of TXOP sharing according to the illustrated concepts. Specifically, Fig. 5 illustrates a scenario where a TXOP is shared by AP1 and AP2 for transmission of multiple PPDUs by each AP. Accordingly, in this example AP1 acts as the sharing AP and AP2 acts as the shared AP. In the example of Fig. 5, a first STA, denoted as STA11, is associated with AP1, i.e., belongs to the BSS of AP1, and a second STA, denoted as STA21, is associated with AP2, i.e., belongs to the BSS of AP2. The example of Fig. 5 involves that AP1 reserves a TXOP and shares this TXOP with AP2, so that CSR-based sharing of the TXOP can be used for transmission of multiple PPDUs by AP1 and for transmission of multiple PPDUs by AP2.

In a measurement phase, measurements of RSSI (Received Signal Strength Indicator) can be collected, e.g., using a poll-based OBSS (Overlapping BSS) RSSI measurement mechanism. In the illustrated example, such measurements may for example involve that AP1 sends a beacon frame and triggers collection of OBSS RSSI measurements by sending an OBSS RSSI poll frame, and STA21 performs OBSS RSSI measurements which are reported to AP2 and further reported to AP1. However, it is noted that also AP2 could transmit a beacon frame, and OBSS RSSI measurements could also be performed by STA11. Based on the collected OBSS RSSI measurement information, AP1 decides whether AP2 should be allowed to participate in CSR-based sharing of the TXOP reserved by AP1. In other variants, the measurement phase could involve that the APs perform measurements of RSSI for STAs in range, including the STAs associated with other APs. The CSR-based sharing of the TXOP is then initiated by transmission of a CSR announcement (CSR ANN) frame by AP1 at the beginning of the TXOP. The CSR ANN frame also indicates the reservation of the TXOP to other devices. The CSR ANN frame may indicate that AP2 is allowed to participate in CSR-based sharing of the TXOP and may also indicate a power budget available to AP2 in the shared TXOP. Based on this information, AP2 may then decide whether to participate in the CSR-based sharing of the TXOP. AP1 then uses the TXOP to transmit PPDUs to STA11. AP2 uses the TXOP to transmit PPDUs to STA21 For each received PPDU, STA11 responds with a BA transmitted to AP1. Similarly, for each received PPDU, STA21 responds with a BA transmitted to AP2.

As can be seen, in the example of Fig. 5, each BA transmitted from STA21 to AP2 is time-aligned with a BA transmitted from STA11 to AP1. In particular, BA21 is time-aligned with BA11, and BA22 is time-aligned with BA12. As further illustrated in Fig.5, also the transmissions of the PPDUs from AP2 are time-aligned with transmissions of PPDUs from AP1. In particular, the transmission of PPDU21 is time-aligned with the transmission of PPDU11, and the transmission of PPDU22 is time-aligned with PPDU12.

The above-mentioned time-alignment of transmissions in the example of Fig. 5 may be based on control information signaled from the sharing AP to the shared AP(s), i.e., in the illustrated example on control information signaled from AP1 to AP2. The control information may be signaled during announcement or setup of the CSR-based sharing of the TXOP, e.g., in the CSR ANN frame transmitted by AP1.

In some variants, the control information signaled to the shared AP(s) may include the durations of each PPDU to be sent by the sharing AP and the durations of the related BA transmissions to the sharing AP. The shared AP(s), after receiving this information, may adapt the timing of their PPDU transmissions to the timing of the PPDU transmissions and BA transmissions of the sharing AP as indicated by the control information. In this way, also the timing of the BA transmissions to the shared AP(s) is adapted to the timing of the BA transmissions to the sharing AP. The adaptation of the timing of the PPDU transmissions by the shared AP(s) may also include the possibility of extending the PPDU transmission by padding data so as to match the duration of the time-aligned PPDU by the sharing AP. Further, the adaptation may involve providing control information to the STA(s) associated with the shared AP, in the example of Fig. 5 to STA21, so that the STA(s) associated with the shared AP apply a BA configuration which ensures that the duration of the BA from the shared BA matches the duration of the BA from the sharing AP.

In some variants, the control information signaled to the shared AP(s) may include a complete schedule of PPDU transmissions from the sharing AP and of the related BA transmissions, i.e., individually indicate the timing of each PPDU from the sharing AP and the timing of the related BA transmission in terms of duration of the PPDU transmission and duration of the related BA transmission. In order to reduce the amount of control information for indicating the schedule of PPDU transmissions from the sharing AP, it would however also be possible to indicate a combined duration of the PPDU transmission and the related BA transmission, e.g., a duration corresponding to the sum of the duration of the PPDU transmission plus the duration of the related BA transmission, and typically also plus a duration of an SIFS (Short Interframe Space) between the PPDU transmission and the related BA transmission.

As an alternative or in addition, the amount of control information for indicating the schedule of PPDU transmissions from the sharing AP may also be reduced by explicitly indicating the timing for one of the PPDU transmissions from the sharing AP the related BA transmission, and using this information to derive the timing of one or more other PPDU transmissions from the sharing AP and the related BA transmission(s). This derivation may for example be based on assuming that all PPDUs transmissions from the sharing AP have the same duration, and on assuming that also all BA transmissions to the sharing AP have the same duration. Here, it is noted that these assumptions do need to be fulfilled in a strict manner. For example, if the durations of the BA transmissions vary, e.g., due to different BA configurations applied by the STAs sending the BAs, this could result in time-overlap of a PPDU transmission from one AP and a BA transmission to another AP, which may result in some additional interference.

However, such interference would not be present over the entire duration of the PPDU transmission and could thus be tolerable. Further, since the PPDU transmission and the related BA transmission are typically separated by an SIFS, the risk of such overlap would be rather small. In each of these variants, the duration of an PPDU transmission, the duration of a BA transmission, or the combined duration may be indicated in terms of absolute time, in terms of a relation, e.g., with respect to the duration of the TXOP, or in terms of a number of OFDM symbols.

In some variants, the control information may also indicate a BA configuration to be applied for the BA transmissions to the shared AP(s) and/or an MCS to be applied for the BA transmissions to the shared AP(s).

In some variants, the control information provided by the AP may also include a flag or other indicator to inform the shared AP(s) whether and/or how the time-alignment of BA transmissions is to be configured and performed.

In some variants, the time-aligned BA transmissions may use the same radio resources of the TXOP based on spatial reuse. In addition or as an alternative, the time-aligned BA transmissions may at least in part be separated by OFDM or some other form of frequency-division multiplexing. In this way, the interference between the BA transmissions to different APs may be reduced. The control information may indicate whether such separation of the BA transmissions is required and, if this is the case, also indicate frequency resources to be used of the BA transmissions.

In the example of Fig. 5, only the CSR ANN frame is used for setup and initiating the CSR-based TXOP sharing. The underlying sharing mechanism may thus be regarded as being opportunistic because it is up to the AP receiving the CSR ANN frame whether or to which extent it will make use of the TXOP. As a result, the shared AP(s) can also stop transmitting at some point during the shared TXOP, e.g., when the shared AP has no more data to transmit. In the example of Fig. 5, AP1 uses the TXOP to transmit three PPDUs, namely PPDU11, PPDU12, and PPDU13. AP2 in turn transmits only two PPDUs, namely PPDU21 and PPDU22, and stops transmitting after PPDU21. Due to the opportunistic nature of the sharing mechanism, there is no need for AP2 to continue transmitting after the transmission of PPDU22, e.g., by transmitting a PPDU with padding data.

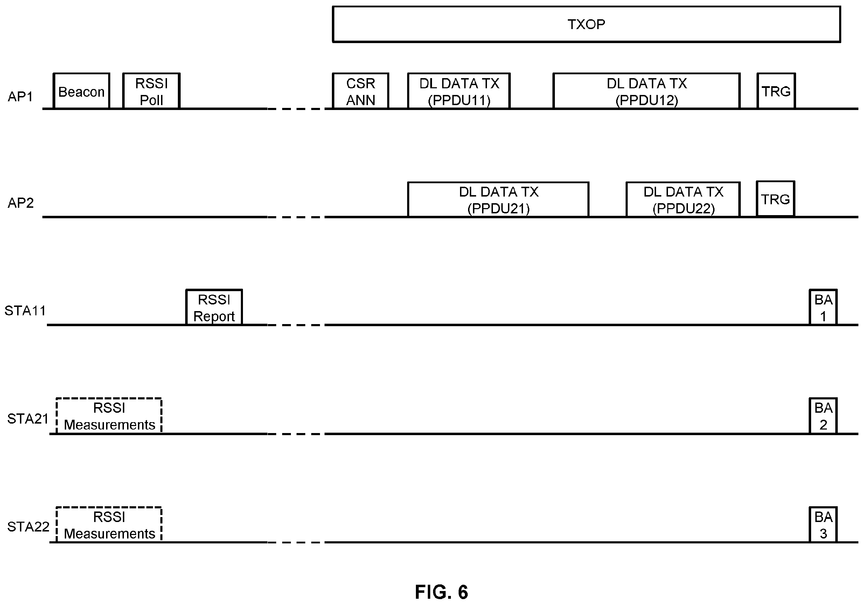

Fig. 6 shows a further example of TXOP sharing according to the illustrated concepts. Specifically, Fig. 6 illustrates a scenario where a TXOP is shared by AP1 and AP2 for transmission of multiple PPDUs by each AP. Accordingly, in this example AP1 acts as the sharing AP and AP2 acts as the shared AP. In the example of Fig. 6, a first STA, denoted as STA11, is associated with AP1, i.e., belongs to the BSS of AP1, and a second STA and a third STA, denoted as STA21 and STA22, are associated with AP2, i.e., belong to the BSS of AP2. The example of Fig. 6 involves that AP1 reserves a TXOP and shares this TXOP with AP2, so that CSR-based sharing of the TXOP can be used for transmission of multiple PPDUs by AP1 and for transmission of multiple PPDUs by AP2. In the example of Fig. 6, it is assumed that AP2 uses the TXOP to transmits a first PPDU (PPDU21) to STA21 and a second PPDU (PPDU22) to STA22.

In a measurement phase, measurements of RSSI can be collected, e.g., using a poll-based OBSS measurement mechanism. In the illustrated example, such measurements may for example involve that AP1 sends a beacon frame and triggers collection of OBSS RSSI measurements by sending an OBSS RSSI poll frame, and STA21 and STA22 perform OBSS RSSI measurements which are reported to AP2 and further reported to AP1. However, it is noted that also AP2 could transmit a beacon frame, and OBSS RSSI measurements could also be performed by STA11. In other variants, the measurement phase could involve that the APs perform measurements of RSSI for STAs in range, including the STAs associated with other APs. Based on the collected OBSS RSSI measurement information, AP1 decides whether AP2 should be allowed to participate in CSR-based sharing of the TXOP reserved by AP1. The CSR-based sharing of the TXOP is then initiated by transmission of a CSR announcement (CSR ANN) frame by AP1 at the beginning of the TXOP. The CSR ANN frame also indicates the reservation of the TXOP to other devices. The CSR ANN frame may indicate that AP2 is allowed to participate in CSR-based sharing of the TXOP and may also indicate a power budget available to AP2 in the shared TXOP. Based on this information, AP2 may then decide whether to participate in the CSR-based sharing of the TXOP. AP1 then uses the TXOP to transmit PPDU11 and PPDU12 to STA11. AP2 uses the TXOP to transmit PPDU21 to STA21 and then to transmit PPDU22 to STA22. For PPDU11 and PPDU12, STA11 responds with a combined BA transmitted to AP1, denoted as BA1. For PPDU21, STA21 responds with a BA transmitted to AP2, denoted as BA2. For PPDU22, STA22 responds with a BA transmitted to AP2, denoted as BA3.

As can be seen, in the example of Fig. 6, the BA transmissions to the different APs are again time-aligned. In particular, BA2 and BA3 are time-aligned with BA1. In this case, the BA transmissions are time-aligned at the end of the TXOP. This is achieved by triggering the BA transmissions by trigger frames (TRG) which are transmitted by AP1 and AP2 after finishing the transmissions of the PPDUs. The BA transmissions are thus not performed immediately after the related PPDU transmission, but rather in a delayed manner.

In some variants, the delayed BA transmissions may configured by control information signaled by the sharing AP, e.g., in the CSR announcement or setup phase, such as by the CSR ANN frame. In such cases, the control information could schedule the BA transmissions to be performed at the end of the TXOP. The control information may for example indicate a time when to trigger the BA transmissions, e.g., by indicating when the shared AP(s) should send the trigger frame. Further, such control information could indicate whether to perform the BA transmissions in a delayed manner. In some cases, the APs and STAs could also be preconfigured to perform the transmissions in a delayed manner, e.g., based on operator settings or based on standardization.

In some variants, the control information signaled by the sharing AP may also indicate a type of BA to be used. As for example explained for BA1, one such type of BA could be a BA which aggregates acknowledgement information for multiple PPDUs. Different types of BA may also differ with respect to the data size of the BA transmission, e.g., because some types of BA may require larger bitmaps to indicate the acknowledgement information for multiple PPDUs. However, it is also noted that since the BA transmissions are performed at the end of the TXOP, requirements concerning the time-alignment of the BA transmissions may be relaxed to some degree, so that BA transmissions of different duration are possible, provided that they can be completed before the end of the TXOP.

In the example of Fig. 6, the APs may inform the STAs that the BA transmissions are to be performed in the delayed manner. For example, a corresponding flag or other indicator could be included in the PPDU transmissions to the STAs.

In the example of Fig. 6, the coordinated transmission of the BAs at the end of the TXOP provides high flexibility with respect to coordination of the preceding PPDUs. In particular, time-alignment of PPDU transmissions by different APs is not required, and the PPDU transmissions may differ with respect to their durations. It is however noted that in the example of Fig. 6 the shared AP, i.e., AP2, may need to continue transmitting until the BA transmissions are triggered to ensure that the reservation of the TXOP is kept also for AP2.

It is noted that principle as explained in connection with Figs. 5 and 6 could also be combined. For example, within the same TXOP some BA transmissions could be performed in a time-aligned manner immediately following the related PPDU transmissions as explained in connection with Fig. 5, while other BA transmissions are performed in a delayed manner as explained in connection with Fig. 6.

Further, it is noted that in the examples of Figs. 5 and 6 various ways of performing and coordinating the time-aligned BA transmissions to different APs could be utilized. For example, the BA transmissions to different APs could be separated by OFDM or some other frequency-division multiplexing scheme. In addition or as an alternative, the BA transmissions to different APs could be based on spatial reuse of the same radio resources of the TXOP, either using transmit power control on the BA transmissions or without transmit power control. By using a low order MCS for the BA transmissions, a certain degree of interference among the BA transmissions may be tolerated.

Further, it is noted that in the examples of Figs. 5 and 6 various ways of setup and initiating the CSR-based TXOP sharing could be utilized instead of the one-way transmission of the CSR ANN frame, e.g., using a handshake message exchange between the sharing AP and the shared AP(s), such as a handshake message exchange involving a CTI, CTR, and CTAS messages explained in connection with Figs. 1A, 1B, and 1C. During such handshake message exchange, the above-mentioned control information could be signaled by any message transmitted from the sharing AP to the shared AP(s).

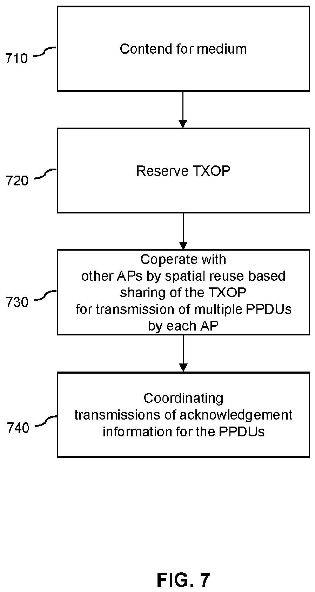

Fig. 7 shows a flowchart for illustrating a method, which may be utilized for implementing the illustrated concepts. The method of Fig. 7 may be used for implementing the illustrated concepts in an AP for a wireless communication system, in particular in an AP which operates as a sharing AP. The wireless communication system may be based on a wireless local area network, WLAN, technology, e.g., according to the IEEE 802.11 standards family. The AP may for example correspond to any of the above-mentioned APs 10.

If a processor-based implementation of the AP is used, at least some of the steps of the method of Fig. 7 may be performed and/or controlled by one or more processors of the AP. Such AP may also include a memory storing program code for implementing at least some of the below described functionalities or steps of the method of Fig. 7.

At step 710, the AP contends for access to a medium. This may involve performing a CCA (Clear Channel Assessment) or LBT (Listen Before Talk) procedure to assess whether the medium is occupied. The CCA or LBT procedure may be based on a contention window which is extended with each unsuccessful access attempt. In some scenarios, the AP may win the contention for access to the medium. In other scenarios, another AP may win the contention for access to the medium.

At step 720, in response to gaining access to the medium, the AP reserves a TXOP on the medium. This may for example be accomplished by sending a message on the medium which indicates a duration of the reservation. In the examples of Figs. 5 and 6, the CSR ANN message also causes reservation of the TXOP.

At step 730, the AP cooperates with one or more further APs of the wireless communication system by sharing the TXOP. The sharing of the TXOP is based on spatial reuse, in particular coordinated spatial reuse, of at least some radio resources of the TXOP for transmission of multiple PPDUs by each of the APs.

At step 740, the AP coordinates transmissions of acknowledgment information for each of the multiple PPDUs within the TXOP. The acknowledgement information may in particular include a BA for each of the PPDUs. The transmissions of acknowledgement information may thus correspond to the above-mentioned BA transmissions.

In some scenarios, step 740 may involve that the AP provides control information to the one or more further APs. The control information may coordinate the transmissions of the acknowledgment information for each of the multiple PPDUs within the TXOP. Specifically, the one or more further APs may use the control information to control the transmissions of acknowledgement information related to their own transmitted PPDUs with the transmissions of acknowledgement information related to the PPDUs transmitted by the AP. The coordination may involve that the one or more further APs adapt their respective transmission timing to the transmission timing of the AP.

In some scenarios, the control information schedules the transmissions of the acknowledgement information on radio resources of the TXOP which are distinct from radio resources assigned for transmission of the PPDUs.

In some scenarios, the control information schedules transmissions of the acknowledgement information to different ones of the AP and the one or more further APs on radio resources of the TXOP which are time-aligned with respect to each other.

In some scenarios, for a first set of the PPDUs the control information schedules transmissions of the acknowledgement information to the respective AP on first radio resources of the TXOP which are time-aligned with respect to each other, and for a second set of the PPDUs the control information schedules transmissions of the acknowledgement information to the respective AP on second radio resources of the TXOP which are time-aligned with respect to each other. An example of such scenario is illustrated in Fig. 5, where the first set of radio resources is used for transmission of BA11 and B21 and the second set of radio resources is used for transmission of BA12 and BA22. As can also be seen from this example, in some scenarios an end time of the first radio resources is before transmission of the second set of PPDUs.

In some scenarios, the control information may schedule the transmissions of the acknowledgement information according to an time-periodic pattern. An example of such scheduling is shown in Fig. 5. As explained in connection with Fig. 5, the time-periodic pattern may be a consequence of assuming that the transmissions of the multiple PPDUs by the AP have the same or similar durations.

In some scenarios, the control information may schedule the transmissions of the acknowledgement information after the transmission of the PPDUs in the TXOP. Fig. 6 illustrates an example of such scenario.

In some scenarios, the control information may indicate, for at least a first of the PPDUs to be transmitted by the AP, a duration for transmission of the PPDU. Further, the control information could also indicate the duration for transmission of the PPDU individually for each of the PPDUs to be transmitted by the AP.

In some scenarios, the control information may indicate, for at least a first of the PPDUs to be transmitted by the AP, a duration for the transmission of acknowledgement information for the PPDU. Further, the control information could also indicate the duration for transmission of the acknowledgement information for the PPDU individually for each of the PPDUs to be transmitted by the AP.

In some scenarios, the control information may indicate, for at least a first of the PPDUs to be transmitted by the AP, a combined duration for the transmission of the PPDU and transmission of acknowledgement information for the PPDU. Further, the control information could also indicate the combined duration for the transmission of the PPDU and transmission of acknowledgement information for the PPDU individually for each of the PPDUs to be transmitted by the AP.

In some scenarios, the control information may indicate an MCS to be applied for the transmissions of the acknowledgement information. Further, the control information could also indicate some other configuration to be applied for the transmissions of the acknowledgement information, e.g., whether to aggregate acknowledgement information for multiple PPDUs in a single transmission.

In some scenarios, at least a part of the control information is transmitted in a message for coordinating the sharing of the TXOP by the APs, such as in the above-mentioned CSR ANN frame.

In some scenarios, the transmissions of the acknowledgement information are triggered by a message after the transmission of the PPDUs in the TXOP, such as explained in connection with Fig. 6. In such scenario, the control information could indicate when the one or more further APs shall send the message for triggering the transmissions of the acknowledgement information.

In some scenarios, transmissions of the acknowledgement information by different APs share radio resources of the TXOP based on OFDM or some other frequency-division multiplexing scheme.

In some scenarios, time-aligned transmissions of the acknowledgement information to different APs share radio resources of the TXOP based on spatial reuse. Such spatial reuse may be with transmit power control or without transmit power control on the time-aligned transmissions of the acknowledgement information.

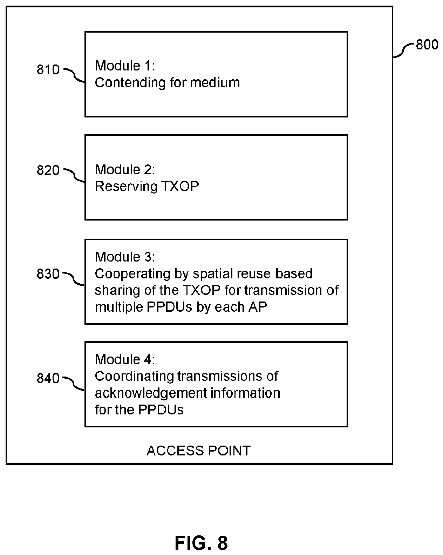

Fig. 8 shows a block diagram for illustrating functionalities of an AP 800 which operates according to the method of Fig. 7. The AP 800 may for example correspond to one of above-mentioned APs 10. As illustrated, the AP 800 may be provided with a module 810 configured to contend for a medium, such as explained in connection with step 710. Further, the AP 800 may be provided with a module 820 configured to reserve a TXOP on the medium, such as explained in connection with step 720. Further, the AP 800 may be provided with a module 830 configured to cooperate with one or more other APs by sharing a TXOP based on spatial reuse, such as explained in connection with step 730. Further, the AP 800 may be provided with a module 840 configured to coordinate transmissions of acknowledgement information, such as explained in connection with step 740.

It is noted that the AP 800 may include further modules for implementing other functionalities, such as known functionalities of a WLAN AP. Further, it is noted that the modules of the AP 800 do not necessarily represent a hardware structure of the AP 800, but may also correspond to functional elements, e.g., implemented by hardware, software, or a combination thereof.

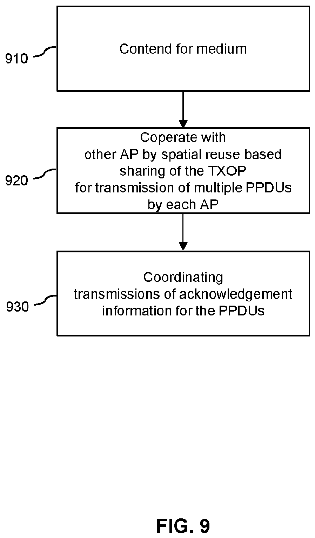

Fig. 9 shows a flowchart for illustrating a method, which may be utilized for implementing the illustrated concepts. The method of Fig. 9 may be used for implementing the illustrated concepts in an AP for a wireless communication system, in particular in an AP operating as a shared AP. The wireless communication system may be based on a wireless local area network, WLAN, technology, e.g., according to the IEEE 802.11 standards family. The AP may for example correspond to any of the above-mentioned APs 10.

If a processor-based implementation of the AP is used, at least some of the steps of the method of Fig. 9 may be performed and/or controlled by one or more processors of the AP. Such AP may also include a memory storing program code for implementing at least some of the below described functionalities or steps of the method of Fig. 9.

At step 910, the AP contends for access to a medium. This may involve performing a CCA or LBT procedure to assess whether the medium is occupied. The CCA or LBT procedure may be based on a contention window which is extended with each unsuccessful access attempt. In some scenarios, the AP may win the contention for access to the medium. In other scenarios, another AP s of the wireless communication system may win the contention for access to the medium.

At step 920, in response to another AP gaining access to the medium, the AP cooperates with the other AP by sharing the TXOP. The sharing of the TXOP is based on spatial reuse, in particular coordinated spatial reuse, of at least some radio resources of the TXOP for transmission of multiple PPDUs by each of the APs.

At step 930, the AP coordinates transmission of acknowledgment information. In particular, step 930 involves that for each of the PPDUs transmitted by the AP, the AP coordinates transmission of acknowledgment information for the PPDU within the TXOP with transmission of acknowledgement information for the PPDUs transmitted by the other AP. The coordination may involve that the AP adapt its transmission timing to the transmission timing of the other AP.

In some scenarios, step 940 may involve that the AP receives control information from the other AP and, based on the control information, coordinates the transmission of acknowledgment information for the PPDU within the TXOP with transmission of acknowledgement information for the PPDUs transmitted by the other AP.

In some scenarios, the control information schedules the transmissions of the acknowledgement information on radio resources of the TXOP which are distinct from radio resources assigned for transmission of the PPDUs.

In some scenarios, the control information schedules transmissions of the acknowledgement information to different ones of the AP and the one or more further APs on radio resources of the TXOP which are time-aligned with respect to each other.

In some scenarios, for a first set of the PPDUs the control information schedules transmissions of the acknowledgement information to the respective AP on first radio resources of the TXOP which are time-aligned with respect to each other, and for a second set of the PPDUs the control information schedules transmissions of the acknowledgement information to the respective AP on second radio resources of the TXOP which are time-aligned with respect to each other. An example of such scenario is illustrated in Fig. 5, where the first set of radio resources is used for transmission of BA11 and B21 and the second set of radio resources is used for transmission of BA12 and BA22. As can also be seen from this example, in some scenarios an end time of the first radio resources is before transmission of the second set of PPDUs.

In some scenarios, the control information may schedule the transmissions of the acknowledgement information according to an time-periodic pattern. An example of such scheduling is shown in Fig. 5. As explained in connection with Fig. 5, the time-periodic pattern may be a consequence of assuming that the transmissions of the multiple PPDUs by the AP have the same or similar durations.

In some scenarios, the control information may schedule the transmissions of the acknowledgement information after the transmission of the PPDUs in the TXOP. Fig. 6 illustrates an example of such scenario.

In some scenarios, the control information may indicate, for at least a first of the PPDUs to be transmitted by the other AP, a duration for transmission of the PPDU. Further, the control information could also indicate the duration for transmission of the PPDU individually for each of the PPDUs to be transmitted by the other AP.

In some scenarios, the control information may indicate, for at least a first of the PPDUs to be transmitted by the other AP, a duration for the transmission of acknowledgement information for the PPDU. Further, the control information could also indicate the duration for transmission of the acknowledgement information for the PPDU individually for each of the PPDUs to be transmitted by the other AP.

In some scenarios, the control information may indicate, for at least a first of the PPDUs to be transmitted by the other AP, a combined duration for the transmission of the PPDU and transmission of acknowledgement information for the PPDU. Further, the control information could also indicate the combined duration for the transmission of the PPDU and transmission of acknowledgement information for the PPDU individually for each of the PPDUs to be transmitted by the other AP.

In some scenarios, the control information may indicate an MCS to be applied for the transmissions of the acknowledgement information. Further, the control information could also indicate some other configuration to be applied for the transmissions of the acknowledgement information, e.g., whether to aggregate acknowledgement information for multiple PPDUs in a single transmission.

In some scenarios, at least a part of the control information is transmitted in a message for coordinating the sharing of the TXOP by the APs, such as in the above-mentioned CSR ANN frame.

In some scenarios, the transmissions of the acknowledgement information are triggered by a message after the transmission of the PPDUs in the TXOP, such as explained in connection with Fig. 6. In such scenario, the control information could indicate when the AP shall send the message for triggering the transmissions of the acknowledgement information.

In some scenarios, transmissions of the acknowledgement information by different APs share radio resources of the TXOP based on OFDM or some other frequency-division multiplexing scheme.

In some scenarios, time-aligned transmissions of the acknowledgement information to different APs share radio resources of the TXOP based on spatial reuse. Such spatial reuse may be with transmit power control or without transmit power control on the time-aligned transmissions of the acknowledgement information.

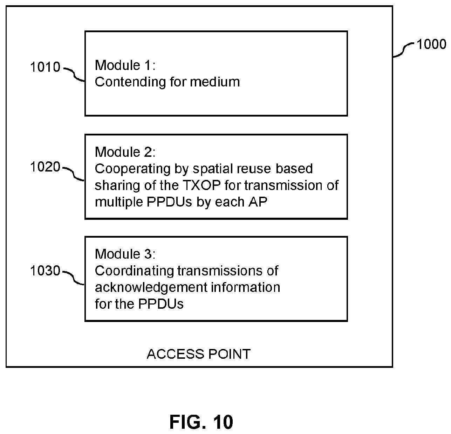

Fig. 10 shows a block diagram for illustrating functionalities of an AP 1000 which operates according to the method of Fig. 9. The AP 1000 may for example correspond to one of above-mentioned APs 10. As illustrated, the AP 1000 may be provided with a module 1010 configured to contend for a medium, such as explained in connection with step 910. Further, the AP 1000 may be provided with a module 1020 configured to cooperate with another AP by sharing a TXOP based on spatial reuse, such as explained in connection with step 920. Further, the AP 1000 may be provided with a module 1030 configured to coordinate transmissions of acknowledgement information, such as explained in connection with step 930.

It is noted that the AP 1000 may include further modules for implementing other functionalities, such as known functionalities of a WLAN AP. Further, it is noted that the modules of the AP 1000 do not necessarily represent a hardware structure of the AP 1000, but may also correspond to functional elements, e.g., implemented by hardware, software, or a combination thereof.

It is noted that the functionalities as described in connection with Figs. 7 to 10 could also be implemented in a system, e.g., a system including an AP operating as sharing AP according to the method of Fig. 7 and one or more further APs operating as shared APs according to the method of Fig. 9. Further, the same AP could operate according to both the method of Fig. 7 and the method of Fig. 9, e.g., depending on whether the AP itself has gained access to the medium and reserved a TXOP. In response to gaining access to the medium and reserving the TXOP, the AP could operate as a sharing AP according to the method of Fig. 7. If some other AP gained access to the medium and reserved a TXOP, the AP could operate as a shared AP according to the method of Fig. 9. Further, such system could include one or more wireless devices associated with the APs. Further, it is noted that some of the functionalities described in connection with Figs. 7 to 10 may also have corresponding functionalities in a wireless device, e.g., STA, associated with the AP operating according to the method of Fig. 7 or a wireless device, e.g., STA, associated with the AP operating according to the method of Fig. 9. Such functionalities may include that the wireless device performs the transmissions of the acknowledgement information in accordance with control information from the associated AP, so as to achieve the coordination of the transmissions of acknowledgement information. This may for example include that the wireless device performs the transmission of acknowledgement information in response to the triggering message from the associated AP, that the wireless device performs the transmission of acknowledgement information with a configuration and/or with an MCS as indicated by control information received from the associated AP, and/or that the wireless device performs the transmission of acknowledgement information with a transmit power indicated by control information received from the associated AP.

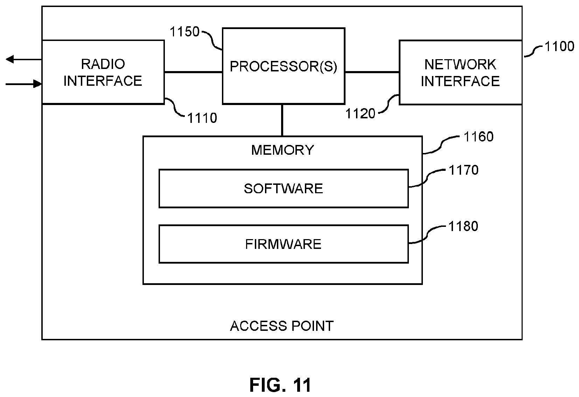

Fig. 11 illustrates a processor-based implementation of an AP 1100 which may be used for implementing the above-described concepts. For example, the structures as illustrated in Fig. 11 may be used for implementing the concepts in any of the above-mentioned APs 10.

As illustrated, the AP 1100 includes one or more radio interfaces 1110. The radio interface(s) 1110 may for example be based on a WLAN technology, e.g., according to an IEEE 802.11 family standard. However, other wireless technologies could be supported as well, e.g., the LTE technology or the NR technology. In some scenarios, the radio interface(s) 1110 may be based on multiple antennas of the AP 1100 and support beamformed multi-antenna port transmission to enable spatial multiplexing of wireless transmissions. As further illustrated, the AP 1100 may also include one or more network interfaces 1120 which may be used for communication with other nodes of a wireless communication network, e.g., with other APs or with an application service platform as illustrated in Fig. 4.

Further, the AP 1100 may include one or more processors 1150 coupled to the radio interface(s) 1110 and a memory 1160 coupled to the processor(s) 1150. By way of example, the radio interface(s) 1110, the processor(s) 1150, and the memory 1160 could be coupled by one or more internal bus systems of the AP 1100. The memory 1160 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 1160 may include software 1170 and/or firmware 1180. The memory 1160 may include suitably configured program code to be executed by the processor(s) 1150 so as to implement the above-described functionalities for controlling wireless transmissions, such as explained in connection with Figs. 7 to 10.

It is to be understood that the structures as illustrated in Fig. 11 are merely schematic and that the AP 1100 may actually include further components which, for the sake of clarity, have not been illustrated, e.g., further interfaces or further processors. Also, it is to be understood that the memory 1160 may include further program code for implementing known functionalities of a WLAN AP. According to some embodiments, also a computer program may be provided for implementing functionalities of the AP 1100, e.g., in the form of a physical medium storing the program code and/or other data to be stored in the memory 1160 or by making the program code available for download or by streaming.

As can be seen, the concepts as described above may be used for efficient utilization of spatial reuse for coordinated operation of APs. In particular CSR operation can be used for transmission of multiple PPDUs per AP in a TXOP. As a result, CSR operation can be implemented with high flexibility and low overhead. This may in turn help to achieve an increased throughput or otherwise improved performance.

It is to be understood that the examples and embodiments as explained above are merely illustrative and susceptible to various modifications. For example, the illustrated concepts may be applied in connection with various kinds of wireless technologies, without limitation to WLAN technologies. Further, the concepts may be applied with respect to various types of APs and STAs. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

## Claims

1. A method of controlling wireless transmissions in a wireless communication system, the method comprising:
an access point (10; 800; 1100) of the wireless communication system contending for access to a medium;
in response to gaining access to the medium, the access point (10; 800; 1100) reserving a transmission opportunity, TXOP, on the medium;
the access point (10; 800; 1100) cooperating with one or more further access points (10; 1000; 1100) of the wireless communication system by sharing the TXOP based on spatial reuse of at least some radio resources of the TXOP for transmission of multiple physical protocol data units, PPDUs, by each of the access points (10; 800; 1000; 1100); and
the access point (10; 800; 1100) coordinating transmissions of acknowledgment information for each of the multiple PPDUs within the TXOP to avoid interference between the transmissions of the PPDUs and the transmissions of the acknowledgement information.

2. The method according to claim 1, comprising:
the access point (10; 800; 1100) providing control information to the one or more further access points (10; 1000; 1100), the control information coordinating the transmissions of the acknowledgment information for each of the multiple PPDUs within the TXOP.

3. The method according to claim 2,
wherein the control information schedules the transmissions of the acknowledgement information on radio resources of the TXOP which are distinct from radio resources assigned for transmission of the PPDUs, and/or
wherein the control information schedules transmissions of the acknowledgement information to different ones of the access point (10; 800; 1100) and the one or more further access points (10; 1000; 1100) on radio resources of the TXOP which are time-aligned with respect to each other, and/or
wherein for a first set of the PPDUs the control information schedules transmissions of the acknowledgement information to the respective access point (10; 800; 1000; 1100) on first radio resources of the TXOP which are time-aligned with respect to each other and for a second set of the PPDUs the control information schedules transmissions of the acknowledgement information to the respective access point (10; 800; 1000; 1100) on second radio resources of the TXOP which are time-aligned with respect to each other, with an end time of the first radio resources being before transmission of the second set of PPDUs.

4. The method according to claim 2 or 3,
wherein the control information schedules the transmissions of the acknowledgement information according to a time-periodic pattern, and/or
wherein the control information schedules the transmissions of the acknowledgement information after the transmission of the PPDUs in the TXOP, and/or
wherein the control information indicates, for at least a first of the PPDUs to be transmitted by the access point (10; 800; 1100), a duration for transmission of the PPDU, and/or
wherein the control information indicates, for at least a first of the PPDUs to be transmitted by the access point (10; 800; 1100), a duration for the transmission of acknowledgement information for the PPDU, and/or
wherein the control information indicates, for at least a first of the PPDUs to be transmitted by the access point (10; 800; 1100), a combined duration for the transmission of the PPDU and transmission of acknowledgement information for the PPDU, and/or
wherein the control information indicates a modulation and coding scheme, MCS, to be applied for the transmissions of the acknowledgement information, and/or
wherein at least a part of the control information is transmitted in a message for coordinating the sharing of the TXOP by the access points (10; 800; 1000; 1100).

5. The method according to any one of claims 1 to 4,
wherein the transmissions of the acknowledgement information are triggered by a message after the transmission of the PPDUs in the TXOP, and/or
wherein transmissions of the acknowledgement information by different access points (10; 800; 1000; 1100) share radio resources of the TXOP based on orthogonal frequency-division multiplexing, and/or
wherein time-aligned transmissions of the acknowledgement information to different access points (10; 800; 1000; 1100) share radio resources of the TXOP based on spatial reuse with transmit power control.

6. The method according to any one of claims 1 to 5,
wherein the wireless communication system is based on a Wireless Local Area Network technology according to the IEEE 802.11 standards family.

7. A method of controlling wireless transmissions in a wireless communication system, the method comprising:
an access point (10; 1000; 1100) of the wireless communication system contending for access to a medium;
in response to another access point (10; 800; 1100) of the wireless communication system gaining access to the medium and reserving a transmission opportunity, TXOP, on the medium, the access point (10; 1000; 1100) cooperating with the other access point (10; 800; 1100) by sharing the TXOP based on spatial reuse of at least some radio resources of the TXOP for transmission of multiple physical protocol data units, PPDUs, by each of the access points (10; 800; 1000; 1100); and
for each of the PPDUs transmitted by the access point (10; 1000; 1100), the access point coordinating transmission of acknowledgement information for the PPDU within the TXOP with transmission of acknowledgement information for the PPDUs transmitted by the other access point (10; 800; 1100) to avoid interference between the transmissions of the PPDUs and the transmissions of the acknowledgement information.

8. The method according to claim 7, comprising:
the access point (10; 1000; 1100) receiving control information from the other access point (10; 800; 1100); and
based on the control information, the access point (10; 1000; 1100) coordinating the transmission of acknowledgment information for the PPDU within the TXOP with transmission of acknowledgement information for the PPDUs transmitted by the other access point (10; 800; 1100).

9. The method according to claim 8,
wherein the control information schedules the transmissions of the acknowledgement information on radio resources of the TXOP which are distinct from radio resources assigned for transmission of the PPDUs, and/or
wherein the control information schedules transmissions of the acknowledgement information to different ones of the access point (10; 1000; 1100) and the other access point (10; 800; 1100) on radio resources of the TXOP which are time-aligned with respect to each other, and/or
wherein for a first set of the PPDUs the control information schedules transmissions of the acknowledgement information to the respective access point (10; 800; 1000; 1100) on first radio resources of the TXOP which are time-aligned with respect to each other and for a second set of the PPDUs the control information schedules transmissions of the acknowledgement information to the respective access point (10; 800; 1000; 1100) on second radio resources of the TXOP which are time-aligned with respect to each other, with an end time of the first radio resources being before transmission of the second set of PPDUs.

10. The method according to claim 8 or 9,
wherein the control information schedules the transmissions of the acknowledgement information according to a time-periodic pattern, and/or
wherein the control information schedules the transmissions of the acknowledgement information after the transmission of the PPDUs in the TXOP, and/or
wherein the control information indicates, for at least a first of the PPDUs to be transmitted by the other access point (10; 800; 1100), a duration for transmission of the PPDU, and/or
wherein the control information indicates, for at least a first of the PPDUs to be transmitted by the other access point (10; 800; 1100), a duration for the transmission of acknowledgement information for the PPDU, and/or
wherein the control information indicates, for at least a first of the PPDUs to be transmitted by the other access point (10; 800; 1100), a combined duration for the transmission of the PPDU and transmission of acknowledgement information for the PPDU, and/or
wherein the control information indicates a modulation and coding scheme, MCS, to be applied for the transmissions of the acknowledgement information, and/or
wherein at least a part of the control information is transmitted in a message for coordinating the sharing of the TXOP by the access points (10; 800; 1000; 1100).

11. The method according to any one of claims 7 to 10,
wherein the transmissions of the acknowledgement information are triggered by a message after the transmission of the PPDUs in the TXOP, and/or
wherein transmissions of the acknowledgement information by different access points (10; 800; 1000; 1100) share radio resources of the TXOP based on orthogonal frequency-division multiplexing, and/or
wherein time-aligned transmissions of the acknowledgement information to different access points (10; 800; 1000; 1100) share radio resources of the TXOP based on spatial reuse with transmit power control.

12. The method according to any one of the claims 7 to 11,
wherein the wireless communication system is based on a Wireless Local Area Network technology according to the IEEE 802.11 standards family.

13. An access point (10; 800; 1100) for a wireless communication system, the access point (10; 800; 1100) being configured to:
contend for access to a medium;
in response to gaining access to the medium, reserve a transmission opportunity, TXOP, on the medium;
cooperate with one or more further access points (10; 1000; 1100) of the wireless communication system by sharing the TXOP based on spatial reuse of at least some radio resources of the TXOP for transmission of multiple physical protocol data units, PPDUs, by each of the access points (10; 800; 1000; 1100); and
coordinate transmissions of acknowledgment information for each of the multiple PPDUs within the TXOP to avoid interference between the transmissions of the PPDUs and the transmissions of the acknowledgement information.

14. The access point (10; 800; 1100) according to claim 13,
wherein the access point (10; 800; 1100) configured to perform a method according to any one of claims 1 to 6.

15. An access point (10; 1000; 1100) for a wireless communication system, the access point (10; 1000; 1100) being configured to:
contend for access to a medium;
in response to another access point (10; 800; 1100) of the wireless communication system gaining access to the medium and reserving a transmission opportunity, TXOP, on the medium, cooperate with the other access point (10; 800; 1100) by sharing the TXOP based on spatial reuse of at least some radio resources of the TXOP for transmission of multiple physical protocol data units, PPDUs, by each of the access points (10; 800; 1000; 1100); and
for each of the PPDUs transmitted by the access point (10; 1000; 1100), coordinate transmission of acknowledgment information for the PPDU within the TXOP with transmission of acknowledgement information for the PPDUs transmitted by the other access point (10; 800; 1100) to avoid interference between the transmissions of the PPDUs and the transmissions of the acknowledgement information.

16. The access point (10; 1000; 1100) according to claim 15,
wherein the access point (10; 1000; 1100) is configured to perform a method according to any one of claims 8 to 12.

17. A computer program or computer program product comprising program code to be executed by at least one processor of an access point (10; 800; 1000; 1100), whereby execution of the program code causes the access point (10; 800; 1000; 1100) to perform a method according to any one of claims 1 to 12.

## Patentansprüche

1. Verfahren zur Steuerung von Drahtlosübertragungen in einem Drahtloskommunikationssystem, wobei das Verfahren umfasst, dass:
ein Zugangspunkt (10; 800; 1100) des Drahtloskommunikationssystems um Zugriff auf ein Medium konkurriert;
der Zugangspunkt (10; 800; 1100) in Reaktion auf das Erlangen von Zugriff auf das Medium eine Übertragungsgelegenheit, TXOP, auf dem Medium reserviert;
der Zugangspunkt (10; 800; 1100) mit einem oder mehreren weiteren Zugangspunkten (10; 1000; 1100) des Drahtloskommunikationssystems durch gemeinsames Nutzen der TXOP basierend auf räumlicher Wiederverwendung zumindest einiger Funkressourcen der TXOP zur Übertragung mehrerer physikalischer Protokolldateneinheiten, PPDUs, durch jeden der Zugangspunkte (10; 800; 1000; 1100) zusammenarbeitet; und
der Zugangspunkt (10; 800; 1100) Übertragungen von Bestätigungsinformationen für jede der mehreren PPDUs innerhalb der TXOP koordiniert, um Beeinträchtigung zwischen den Übertragungen der PPDUs und den Übertragungen der Bestätigungsinformationen zu vermeiden.

2. Verfahren nach Anspruch 1, umfassend, dass:
der Zugangspunkt (10; 800; 1100) Steuerinformationen für den einen oder die mehreren weiteren Zugangspunkte (10; 1000; 1100) bereitstellt, wobei die Steuerinformationen die Übertragungen der Bestätigungsinformationen für jede der mehreren PPDUs innerhalb der TXOP koordinieren.

3. Verfahren nach Anspruch 2,
wobei die Steuerinformationen die Übertragungen der Bestätigungsinformationen auf Funkressourcen der TXOP disponieren, die sich von Funkressourcen unterscheiden, die zur Übertragung der PPDUs zugeordnet sind, und/oder
wobei die Steuerinformationen Übertragungen der Bestätigungsinformationen an verschiedene des Zugangspunkts (10; 800; 1100) und des einen oder der mehreren weiteren Zugangspunkte (10; 1000; 1100) auf Funkressourcen der TXOP disponieren, die zeitlich in Bezug aufeinander abgestimmt sind, und/oder
wobei für einen ersten Satz der PPDUs die Steuerinformationen Übertragungen der Bestätigungsinformationen an den jeweiligen Zugangspunkt (10; 800; 1000; 1100) auf ersten Funkressourcen der TXOP disponieren, die in Bezug aufeinander abgestimmt sind, und für einen zweiten Satz der PPDUs die Steuerinformationen Übertragungen der Bestätigungsinformationen an den jeweiligen Zugangspunkt (10; 800; 1000; 1100) auf zweiten Funkressourcen der TXOP disponieren, die in Bezug aufeinander abgestimmt sind, wobei eine Endzeit der ersten Funkressourcen vor der Übertragung des zweiten Satzes von PPDUs ist.

4. Verfahren nach Anspruch 2 oder 3,
wobei die Steuerinformationen die Übertragungen der Bestätigungsinformationen gemäß einem zeitlich periodischen Muster disponieren, und/oder
wobei die Steuerinformationen die Übertragungen der Bestätigungsinformationen nach der Übertragung der PPDUs in der TXOP disponieren, und/oder
wobei die Steuerinformationen für mindestens eine erste der vom Zugangspunkt (10; 800; 1100) zu sendenden PPDUs eine Dauer für die Übertragung der PPDU angeben, und/oder
wobei die Steuerinformationen für mindestens eine erste der vom Zugangspunkt (10; 800; 1100) zu sendenden PPDUs eine Dauer für die Übertragung von Bestätigungsinformationen für die PPDU angeben, und/oder
wobei die Steuerinformationen für mindestens eine erste der vom Zugangspunkt (10; 800; 1100) zu sendenden PPDUs eine kombinierte Dauer für die Übertragung der PPDU und die Übertragung von Bestätigungsinformationen der PPDU angeben, und/oder
wobei die Steuerinformationen ein Modulations- und Codierungsschema, MCS, angeben, das für die Übertragungen der Bestätigungsinformationen verwendet werden soll, und/oder
wobei zumindest ein Teil der Steuerinformationen in einer Nachricht zum Koordinieren der gemeinsamen Nutzung der TXOP durch die Zugangspunkte (10; 800; 1000; 1100) gesendet wird.

5. Verfahren nach einem der Ansprüche 1 bis 4,
wobei die Übertragungen der Bestätigungsinformationen durch eine Nachricht nach der Übertragung der PPDUs in der TXOP ausgelöst werden, und/oder
wobei Übertragungen der Bestätigungsinformationen durch verschiedene Zugangspunkte (10; 800; 1000; 1100) Funkressourcen der TXOP basierend auf einem orthogonalen Frequenzmultiplexverfahren gemeinsam nutzen, und/oder
wobei zeitlich abgestimmte Übertragungen der Bestätigungsinformationen an verschiedene Zugangspunkte (10; 800; 1000; 1100) Funkressourcen der TXOP basierend auf räumlicher Wiederverwendung mit Sendeleistungssteuerung gemeinsam nutzen.

6. Verfahren nach einem der Ansprüche 1 bis 5,
wobei das Drahtloskommunikationssystem auf einer Wireless Local Area Network-Technologie gemäß der IEEE 802.11-Standardfamilie basiert.

7. Verfahren zur Steuerung von Drahtlosübertragungen in einem Drahtloskommunikationssystem, wobei das Verfahren umfasst, dass:
ein Zugangspunkt (10; 1000; 1100) des Drahtloskommunikationssystems um Zugriff auf ein Medium konkurriert;
der Zugangspunkt (10; 800; 1100) in Reaktion darauf, dass ein anderer Zugangspunkt (10; 800; 1100) Zugriff auf das Medium erlangt und eine Übertragungsgelegenheit, TXOP, auf dem Medium reserviert, mit dem anderen Zugangspunkt (10; 1000; 1100) durch gemeinsames Nutzen der TXOP basierend auf räumlicher Wiederverwendung zumindest einiger Funkressourcen der TXOP zur Übertragung mehrerer physikalischer Protokolldateneinheiten, PPDUs, durch jeden der Zugangspunkte (10; 800; 1000; 1100) zusammenarbeitet; und
der Zugangspunkt (10; 1000; 1100) für jede der vom Zugangspunkt gesendeten PPDUs die Übertragung von Bestätigungsinformationen für die PPDU innerhalb der TXOP mit der Übertragung von Bestätigungsinformationen für die vom anderen Zugangspunkt (10; 800; 1100) gesendeten PPDUs koordiniert, um Beeinträchtigung zwischen den Übertragungen der PPDUs und den Übertragungen der Bestätigungsinformationen zu vermeiden.

8. Verfahren nach Anspruch 7, umfassend, dass:
der Zugangsknoten (10; 1000; 1100) Steuerinformationen vom anderen Zugangspunkt (10; 800; 1100) empfängt; und
der Zugangspunkt (10; 1000; 1100) basierend auf den Steuerinformationen die Übertragung von Bestätigungsinformationen für die PPDU innerhalb der TXOP mit der Übertragung von Bestätigungsinformationen für die vom anderen Zugangspunkt (10; 800; 1100) gesendeten PPDUs koordiniert.

9. Verfahren nach Anspruch 8,
wobei die Steuerinformationen die Übertragungen der Bestätigungsinformationen auf Funkressourcen der TXOP disponieren, die sich von Funkressourcen unterscheiden, die zur Übertragung der PPDUs zugeordnet sind, und/oder
wobei die Steuerinformationen Übertragungen der Bestätigungsinformationen an verschiedene des Zugangspunkts (10; 1000; 1100) und des anderen Zugangspunkts (10; 800; 1100) auf Funkressourcen der TXOP disponieren, die zeitlich in Bezug aufeinander abgestimmt sind, und/oder
wobei für einen ersten Satz der PPDUs die Steuerinformationen Übertragungen der Bestätigungsinformationen an den jeweiligen Zugangspunkt (10; 800; 1000; 1100) auf ersten Ressourcen der TXOP disponieren, die in Bezug aufeinander abgestimmt sind, und für einen zweiten Satz der PPDUs die Steuerinformationen Übertragungen der Bestätigungsinformationen an den jeweiligen Zugangspunkt (10; 800; 1000; 1100) auf zweiten Funkressourcen der TXOP disponieren, die in Bezug aufeinander abgestimmt sind, wobei eine Endzeit der ersten Funkressourcen vor der Übertragung des zweiten Satzes von PPDUs ist.

10. Verfahren nach Anspruch 8 oder 9,
wobei die Steuerinformationen die Übertragungen der Bestätigungsinformationen gemäß einem zeitlich periodischen Muster disponieren, und/oder
wobei die Steuerinformationen die Übertragungen der Bestätigungsinformationen nach der Übertragung der PPDUs in der TXOP disponieren, und/oder
wobei die Steuerinformationen für mindestens eine erste der vom anderen Zugangspunkt (10; 800; 1100) zu sendenden PPDUs eine Dauer für die Übertragung der PPDU angeben, und/oder
wobei die Steuerinformationen für mindestens eine erste der vom anderen Zugangspunkt (10; 800; 1100) zu sendenden PPDUs eine Dauer für die Übertragung von Bestätigungsinformationen für die PPDU angeben, und/oder
wobei die Steuerinformationen für mindestens eine erste der vom anderen Zugangspunkt (10; 800; 1100) zu sendenden PPDUs eine kombinierte Dauer für die Übertragung der PPDU und die Übertragung von Bestätigungsinformationen der PPDU angeben, und/oder
wobei die Steuerinformationen ein Modulations- und Codierungsschema, MCS, angeben, das für die Übertragungen der Bestätigungsinformationen verwendet werden soll, und/oder
wobei zumindest ein Teil der Steuerinformationen in einer Nachricht zum Koordinieren der gemeinsamen Nutzung der TXOP durch die Zugangspunkte (10; 800; 1000; 1100) gesendet wird.

11. Verfahren nach einem der Ansprüche 7 bis 10,
wobei die Übertragungen der Bestätigungsinformationen durch eine Nachricht nach der Übertragung der PPDUs in der TXOP ausgelöst werden, und/oder
wobei Übertragungen der Bestätigungsinformationen durch verschiedene Zugangspunkte (10; 800; 1000; 1100) Funkressourcen der TXOP basierend auf einem orthogonalen Frequenzmultiplexverfahren gemeinsam nutzen, und/oder
wobei zeitlich abgestimmte Übertragungen der Bestätigungsinformationen an verschiedene Zugangspunkte (10; 800; 1000; 1100) Funkressourcen der TXOP basierend auf räumlicher Wiederverwendung mit Sendeleistungssteuerung gemeinsam nutzen.

12. Verfahren nach einem der Ansprüche 7 bis 11,
wobei das Drahtloskommunikationssystem auf einer Wireless Local Area Network-Technologie gemäß der IEEE 802.11-Standardfamilie basiert.

13. Zugangspunkt (10; 800; 1100) für ein Drahtloskommunikationssystem, wobei der Zugangspunkt (10; 800; 1100) konfiguriert ist zum:
Konkurrieren um Zugriff auf ein Medium;
Reservieren einer Übertragungsgelegenheit, TXOP, auf dem Medium in Reaktion auf das Erlangen von Zugriff auf das Medium;
Zusammenarbeiten mit einem oder mehreren weiteren Zugangspunkten (10; 1000; 1100) des Drahtloskommunikationssystems durch gemeinsames Nutzen der TXOP basierend auf räumlicher Wiederverwendung zumindest einiger Funkressourcen der TXOP zur Übertragung mehrerer physikalischer Protokolldateneinheiten, PPDUs, durch jeden der Zugangspunkte (10; 800; 1000; 1100); und
Koordinieren von Übertragungen von Bestätigungsinformationen für jede der mehreren PPDUs innerhalb der TXOP, um Beeinträchtigung zwischen den Übertragungen der PPDUs und den Übertragungen der Bestätigungsinformationen zu vermeiden.

14. Zugangspunkt (10; 800; 1100) nach Anspruch 13,
wobei der Zugangspunkt (10; 800; 1100) zum Durchführen eines Verfahrens nach einem der Ansprüche 1 bis 6 konfiguriert ist.

15. Zugangspunkt (10; 1000; 1100) für ein Drahtloskommunikationssystem, wobei der Zugangspunkt (10; 1000; 1100) konfiguriert ist zum:
Konkurrieren um Zugriff auf ein Medium;
Zusammenarbeiten in Reaktion darauf, dass ein anderer Zugangspunkt (10; 800; 1100) Zugriff auf das Medium erlangt und eine Übertragungsgelegenheit, TXOP, auf dem Medium reserviert, mit dem anderen Zugangspunkt (10; 800; 1100) durch gemeinsames Nutzen der TXOP basierend auf räumlicher Wiederverwendung zumindest einiger Funkressourcen der TXOP zur Übertragung mehrerer physikalischer Protokolldateneinheiten, PPDUs, durch jeden der Zugangspunkte (10; 800; 1000; 1100); und
Koordinieren für jede der vom Zugangspunkt (10; 1000; 1100) gesendeten PPDUs der Übertragung von Bestätigungsinformationen für die PPDU innerhalb der TXOP mit der Übertragung von Bestätigungsinformationen für die vom anderen Zugangspunkt (10; 800; 1100) gesendeten PPDUs, um Beeinträchtigung zwischen den Übertragungen der PPDUs und den Übertragungen der Bestätigungsinformationen zu vermeiden.

16. Zugangspunkt (10; 1000; 1100) nach Anspruch 15,
wobei der Zugangspunkt (10; 1000; 1100) zum Durchführen eines Verfahrens nach einem der Ansprüche 8 bis 12 konfiguriert ist.

17. Computerprogramm oder Computerprogrammprodukt, umfassend Programmcode, der von mindestens einem Prozessor eines Zugangspunkts (10; 800; 1000; 1100) ausgeführt werden soll, wobei die Ausführung des Programmcodes den Zugangspunkt (10; 800; 1000; 1100) zum Durchführen eines Verfahrens nach einem der Ansprüche 1 bis 12 veranlasst.

## Revendications

1. Procédé de commande de transmissions sans fil dans un système de communication sans fil, le procédé comprenant :
par un point d'accès (10 ; 800 ; 1100) du système de communication sans fil, la demande d'un accès à un support ;
en réponse à l'obtention d'un accès au support, par le point d'accès (10 ; 800 ; 1100), la réservation d'une opportunité de transmission, TXOP, sur le support ;
par le point d'accès (10 ; 800 ; 1100), la coopération avec un ou plusieurs autres points d'accès (10 ; 1000 ; 1100) du système de communication sans fil par le partage de la TXOP sur la base d'une réutilisation spatiale d'au moins certaines ressources radio de la TXOP pour une transmission de multiples unités de données de protocoles physiques, PPDU, par chacun des points d'accès (10 ; 800 ; 1000 ; 1100) ; et
par le point d'accès (10 ; 800 ; 1100), la coordination de transmissions d'informations d'accusé de réception pour chacune des multiples PPDU à l'intérieur de la TXOP pour éviter toute interférence entre les transmissions de la PPDU et les transmissions des informations d'accusé de réception.

2. Procédé selon la revendication 1, comprenant :
par le point d'accès (10 ; 800 ; 1100), la fourniture d'informations de commande aux un ou plusieurs autres points d'accès (10 ; 1000 ; 1100), les informations de commande coordonnant les transmissions des informations d'accusé de réception pour chacune des multiples PPDU à l'intérieur de la TXOP.

3. Procédé selon la revendication 2,
dans lequel les informations de commande ordonnancent les transmissions des informations d'accusé de réception sur des ressources radio de la TXOP qui sont distinctes de ressources radio attribuées pour une transmission des PPDU, et/ou
dans lequel les informations de commande ordonnancent des transmissions des informations d'accusé de réception à des points différents parmi le point d'accès (10 ; 800 ; 1100) et les un ou plusieurs autres points d'accès (10 ; 1000 ; 1100) sur des ressources radio de la TXOP qui sont alignées entre elles dans le temps, et/ou
dans lequel, pour un premier ensemble des PPDU, les informations de commande ordonnancent des transmissions des informations d'accusé de réception au point d'accès (10 ; 800 ; 1000 ; 1100) respectif sur des premières ressources radio de la TXOP qui sont alignées entre elles dans le temps et, pour un deuxième ensemble des PPDU, les informations de commande ordonnancent des transmissions des informations d'accusé de réception au point d'accès (10 ; 800 ; 1000 ; 1100) respectif sur des deuxièmes ressources radio de la TXOP qui sont alignées entre elles dans le temps, un temps de fin des premières ressources radio étant avant une transmission du deuxième ensemble de PPDU.

4. Procédé selon la revendication 2 ou 3,
dans lequel les informations de commande ordonnancent les transmissions des informations d'accusé de réception selon un motif périodique dans le temps, et/ou
dans lequel les informations de commande ordonnancent les transmissions des informations d'accusé de réception après la transmission des PPDU dans la TXOP, et/ou
dans lequel les informations de commande indiquent, pour au moins une première des PPDU à transmettre par le point d'accès (10 ; 800 ; 1100), une durée de transmission de la PPDU, et/ou
dans lequel les informations de commande indiquent, pour au moins une première des PPDU à transmettre par le point d'accès (10 ; 800 ; 1100), une durée de la transmission d'informations d'accusé de réception pour la PPDU, et/ou
dans lequel les informations de commande indiquent, pour au moins une première des PPDU à transmettre par le point d'accès (10 ; 800 ; 1100), une durée combinée de la transmission de la PPDU et de la transmission d'informations d'accusé de réception pour la PPDU, et/ou
dans lequel les informations de commande indiquent un schéma de modulation et de codage, MCS, à appliquer aux transmissions des informations d'accusé de réception, et/ou
dans lequel au moins une partie des informations de commande est transmise dans un message pour coordonner le partage de la TXOP par les points d'accès (10 ; 800 ; 1000 ; 1100).

5. Procédé selon l'une quelconque des revendications 1 à 4,
dans lequel les transmissions des informations d'accusé de réception sont déclenchées par un message après la transmission des PPDU dans la TXOP, et/ou
dans lequel des transmissions des informations d'accusé de réception par différents points d'accès (10 ; 800 ; 1000 ; 1100) partagent des ressources radio de la TXOP sur la base d'un multiplexage par répartition de fréquence orthogonale, et/ou
dans lequel des transmissions alignées dans le temps des informations d'accusé de réception à différents points d'accès (10 ; 800 ; 1000 ; 1100) partagent des ressources radio de la TXOP sur la base d'une réutilisation spatiale avec une commande de puissance de transmission.

6. Procédé selon l'une quelconque des revendications 1 à 5,
dans lequel le système de communication sans fil est basé sur une technologie de réseau local sans fil selon la famille de normes IEEE 802.11.

7. Procédé de commande de transmissions sans fil dans un système de communication sans fil, le procédé comprenant :
par un point d'accès (10 ; 1000 ; 1100) du système de communication sans fil, la demande d'un accès à un support ;
en réponse à, par un autre point d'accès (10 ; 800 ; 1100) du système de communication sans fil, l'obtention d'un accès au support et la réservation d'une opportunité de transmission, TXOP, sur le support, la coopération, par le point d'accès (10 ; 1000 ; 1100) avec l'autre point d'accès (10 ; 800 ; 1100) par le partage de la TXOP sur la base d'une réutilisation spatiale d'au moins certaines ressources radio de la TXOP pour une transmission de multiples unités de données de protocoles physiques, PPDU, par chacun des points d'accès (10 ; 800 ; 1000 ; 1100) ; et
pour chacune des PPDU transmises par le point d'accès (10 ; 1000 ; 1100), la coordination, par le point d'accès, d'une transmission d'informations d'accusé de réception pour la PPDU à l'intérieur de la TXOP avec une transmission d'informations d'accusé de réception pour les PPDU transmises par l'autre point d'accès (10 ; 800 ; 1100) pour éviter toute interférence entre les transmissions des PPDU et les transmissions des informations d'accusé de réception.

8. Procédé selon la revendication 7, comprenant :
par le point d'accès (10 ; 1000 ; 1100), la réception d'informations de commande depuis les autres points d'accès (10 ; 800 ; 1100) ; et
sur la base des informations de commande, par le point d'accès (10 ; 1000 ; 1100), la coordination de la transmission d'informations d'accusé de réception pour la PPDU à l'intérieur de la TXOP avec une transmission d'informations d'accusé de réception pour les PPDU transmises par l'autre point d'accès (10 ; 800 ; 1100).

9. Procédé selon la revendication 8,
dans lequel les informations de commande ordonnancent les transmissions des informations d'accusé de réception sur des ressources radio de la TXOP qui sont distinctes de ressources radio attribuées pour une transmission des PPDU, et/ou
dans lequel les informations de commande ordonnancent des transmissions des informations d'accusé de réception à des points différents parmi le point d'accès (10 ; 1000 ; 1100) et les autres points d'accès (10 ; 800 ; 1100) sur des ressources radio de la TXOP qui sont alignées entre elles dans le temps, et/ou
dans lequel, pour un premier ensemble des PPDU, les informations de commande ordonnancent des transmissions des informations d'accusé de réception au point d'accès (10 ; 800 ; 1000 ; 1100) respectif sur des premières ressources radio de la TXOP qui sont alignées entre elles dans le temps et, pour un deuxième ensemble des PPDU, les informations de commande ordonnancent des transmissions des informations d'accusé de réception au point d'accès (10 ; 800 ; 1000 ; 1100) respectif sur des deuxièmes ressources radio de la TXOP qui sont alignées entre elles dans le temps, un temps de fin des premières ressources radio étant avant une transmission du deuxième ensemble de PPDU.

10. Procédé selon la revendication 8 ou 9,
dans lequel les informations de commande ordonnancent les transmissions des informations d'accusé de réception selon un motif périodique dans le temps, et/ou
dans lequel les informations de commande ordonnancent les transmissions des informations d'accusé de réception après la transmission des PPDU dans la TXOP, et/ou
dans lequel les informations de commande indiquent, pour au moins une première des PPDU à transmettre par l'autre point d'accès (10 ; 800 ; 1100), une durée de transmission de la PPDU, et/ou
dans lequel les informations de commande indiquent, pour au moins une première des PPDU à transmettre par l'autre point d'accès (10 ; 800 ; 1100), une durée de la transmission d'informations d'accusé de réception pour la PPDU, et/ou
dans lequel les informations de commande indiquent, pour au moins une première des PPDU à transmettre par l'autre point d'accès (10 ; 800 ; 1100), une durée combinée de la transmission de la PPDU et de la transmission d'informations d'accusé de réception pour la PPDU, et/ou
dans lequel les informations de commande indiquent un schéma de modulation et de codage, MCS, à appliquer aux transmissions des informations d'accusé de réception, et/ou
dans lequel au moins une partie des informations de commande est transmise dans un message pour coordonner le partage de la TXOP par les points d'accès (10 ; 800 ; 1000 ; 1100).

11. Procédé selon l'une quelconque des revendications 7 à 10,
dans lequel les transmissions des informations d'accusé de réception sont déclenchées par un message après les transmissions des PPDU dans la TXOP, et/ou
dans lequel des transmissions des informations d'accusé de réception par différents points d'accès (10 ; 800 ; 1000 ; 1100) partagent des ressources radio de la TXOP sur la base d'un multiplexage par répartition de fréquence orthogonale, et/ou
dans lequel des transmissions alignées dans le temps des informations d'accusé de réception à différents points d'accès (10 ; 800 ; 1000 ; 1100) partagent des ressources radio de la TXOP sur la base d'une réutilisation spatiale avec une commande de puissance de transmission.

12. Procédé selon l'une quelconque des revendications 7 à 11,
dans lequel le système de communication sans fil est basé sur une technologie de réseau local sans fil selon la famille de normes IEEE 802.11.

13. Point d'accès (10 ; 800 ; 1100) pour un système de communication sans fil, le point d'accès (10 ; 800 ; 1100) étant configuré pour :
demander un accès à un support ;
en réponse à l'obtention d'un accès au support, réserver une opportunité de transmission, TXOP, sur le support ;
coopérer avec un ou plusieurs autres points d'accès (10 ; 1000 ; 1100) du système de communication sans fil par le partage de la TXOP sur la base d'une réutilisation spatiale d'au moins certaines ressources radio de la TXOP pour une transmission de multiples unités de données de protocoles physiques, PPDU, par chacun des points d'accès (10 ; 800 ; 1000 ; 1100) ; et
coordonner des transmissions d'informations d'accusé de réception pour chacune des multiples PPDU à l'intérieur de la TXOP pour éviter toute interférence entre les transmissions des PPDU et les transmissions des informations d'accusé de réception.

14. Point d'accès (10 ; 800 ; 1100) selon la revendication 13,
dans lequel le point d'accès (10 ; 800 ; 1100) est configuré pour réaliser un procédé selon l'une quelconque des revendications 1 à 6.

15. Point d'accès (10 ; 1000 ; 1100) pour un système de communication sans fil, le point d'accès (10 ; 1000 ; 1100) étant configuré pour :
demander un accès à un support ;
en réponse à, par un autre point d'accès (10 ; 800 ; 1100) du système de communication sans fil, l'obtention d'un accès au support et la réservation d'une opportunité de transmission, TXOP, sur le support, coopérer avec l'autre point d'accès (10 ; 800 ; 1100) par le partage de la TXOP sur la base d'une réutilisation spatiale d'au moins certaines ressources radio de la TXOP pour une transmission de multiples unités de données de protocoles physiques, PPDU, par chacun des points d'accès (10 ; 800 ; 1000 ; 1100) ; et
pour chacune des PPDU transmises par le point d'accès (10 ; 1000 ; 1100), coordonner une transmission d'informations d'accusé de réception pour la PPDU à l'intérieur de la TXOP avec une transmission d'informations d'accusé de réception pour les PPDU transmises par l'autre point d'accès (10 ; 800 ; 1100) pour éviter toute interférence entre les transmissions des PPDU et les transmissions des informations d'accusé de réception.

16. Point d'accès (10 ; 1000 ; 1100) selon la revendication 15,
dans lequel le point d'accès (10 ; 1000 ; 1100) est configuré pour réaliser un procédé selon l'une quelconque des revendications 8 à 12.

17. Programme informatique ou produit programme informatique comprenant un code de programme à exécuter par au moins un processeur d'un point d'accès (10 ; 800 ; 1000 ; 1100), de telle manière qu'une exécution du code de programme amène le point d'accès (10 ; 800 ; 1000 ; 1100) à réaliser un procédé selon l'une quelconque des revendications 1 à 12.
